# EUROPEAN PATENT APPLICATION

(11) **EP 4 834 774 A1**
(43) Date of publication of application: **04.11.2026**
(21) Application number: 23874058.3
(22) Date of filing: 29.12.2023
(51) Int. Cl.: B64U 10/14, B32B 27/20, B64U 20/65, B64U 20/75, B64U 20/80, B64U 30/24, B64U 50/19, B64U 50/23, B64U 101/26, F01D 11/02, F16J 15/32

(54) **DRONE FOR EXPLOSIVE GAS ATMOSPHERES**

(71) Applicant: Alerion Technologies, S.L., 20009 San Sebastián Gipuzkoa (ES)
(72) Inventor: MORCILLO FUENTES, Héctor, 20009 San Sebastián Gipuzkoa (ES); JAUREGUI MAROTO, Axel, 20009 San Sebastián Gipuzkoa (ES); FERNÁNDEZ ÁLVAREZ, Fidel, 20009 San Sebastián Gipuzkoa (ES); PEÑAGARICANO MUÑOA, Oier, 20009 San Sebastián Gipuzkoa (ES)
(74) Representative: Herrero & Asociados, S.L.
(86) International application number: PCT/ES2023/070796
(87) International publication number: WO 2025/141231

(57) **Abstract**

Drone (100) for explosive gas atmospheres, comprising propulsion means (110) comprising propellers (110a) connected to coaxial rotors (110b), pressurized enclosure (120) connected to the propulsion means (110) and comprising polymeric material with conductive fillers, wherein the pressurized enclosure (120) comprises a first cover (130), a central ring (140) and a second cover (150), wherein a first space (A) defined between the first cover (130) and the central ring (140) houses the drone control unit (100) for controlling at least the propulsion means, wherein a second space (B) defined in the central ring (140) houses the power electronics to power the propulsion means and wherein a third space (C) defined between the second cover (150) and the central ring (140) houses one or more control and data acquisition sensors.

## Description

### Object of the invention

The present invention relates to a drone for explosive gas atmospheres.

### Background of the invention

CN115771628A describes a drone for coal mining mines, wherein the drone design requirements are not as strict as for refinery atmospheres.

The state of the art requires a drone designed for explosive gas atmospheres that may include means that guarantee that the drone does not reach temperatures higher than 200 degrees, thus allowing it to operate in the presence of, for example, 90% of the tabulated gases and that may prevent the appearance of sparks due to electrostatics to avoid the exposure of risk elements to the potential mixture of explosive substances.

The present invention meets this demand.

### Description of the invention

The present invention relates to a drone for explosive gas atmospheres. The drone includes constructive and operational security to be able to operate in oil and gas facilities.

The main aspect of the invention refers to a drone for explosive gas atmospheres, which comprises propulsion means comprising propellers connected to coaxial rotors, a pressurized enclosure connected to the propulsion means and comprising polymeric material with conductive fillers, wherein the pressurized enclosure comprises a first cover, a central ring and a second cover, wherein a first space defined between the first cover and the central ring houses the drone control unit for controlling the propulsion means, wherein a second space defined in the central ring houses the power electronics for powering the propulsion means and wherein a third space defined between the second cover and the central ring houses one or more control and data acquisition sensors.

In one example, the propulsion means comprise 4 coaxial rotors or motors connected to 4 propellers.

The 4 propellers are made of suitable materials (e.g. wood, polymer with a conductive filler or carbon fiber with paint or a layer of varnish with conductive fillers) and protected from impact against structures and objects that can be inspected by the drone. Each motor has thermal protection using NTC or RTD probes that activate a cut-off signal for each motor in case of failure.

In another example, the drone may comprise up to 8 coaxial rotors or motors connected to the 4 propellers, i.e.; one redundant motor per propeller. In this example, the drone is prepared to operate with the disconnection of up to 4 motors.

In one example, the coaxial rotors are inrunner-type brushless motors powered by lithium batteries.

In one example, the polymeric material with conductive fillers comprises polymer or polymeric paint.

In one example, the pressurized enclosure comprises pressure labyrinths and O-rings established in the pressure labyrinths in connection planes between the first cover and the central ring and between the second cover and the central ring to prevent leaks and achieve tightness.

In one example, the pressurized enclosure comprises one or more holes adapted for the configuration of one or more cable gland (made of polyamide) configured to seal electrical cables of the pressurized enclosure.

In one example, the first cover and the second cover comprise a domed shape.

In one example, the one or more control and data acquisition sensors comprise cameras and the second cover comprises transparent viewers.

In one example, the one or more control and data acquisition sensors comprise thermal, gas, pressure sensors and/or an ultrasound probe.

In one example, the central ring comprises carbon fiber.

In one example, the first cover comprises a pressurization valve and the second cover comprises a depressurization valve, wherein one or more control and data acquisition sensors comprise pressure sensors.

In one example, the drone control unit comprises a battery for autonomous operation of the control unit.

In one example, the third space houses an on-board computer configured to collect and manage the information collected by the one or more control and data acquisition sensors.

### Drone Safety

For the safety of the drone that may allow its correct operation in explosive gas atmospheres, the drone includes monitoring and redundancy means:
- In relation to redundancy, the drone can include up to eight coaxial rotors and two lithium batteries, allowing accidents to be prevented in the event of failure in any of the propulsion systems (motors, drives, controller output, battery).
- In relation to monitoring, the drone includes sensors to measure the temperatures of each of the motors.
- The drone includes redundant sensors to monitor the internal pressure and temperature of the enclosure (e.g. ensure that the internal temperature of the enclosure does not reach 200°C and obtain correct pressure readings
- The drone has an intrinsic safety circuit designed and built in such a way that it physically cannot produce short circuits or superpowers. The intrinsic safety circuit is responsible for safely powering all the drone's safety sensors, both internal and external. The intrinsic safety circuit is active at all times, since it has its own battery allowing the drone to be pressurized before turning it on. This way, the working sensors are already running and pressurization does not affect their starting readings.

The drone includes cameras, as well as means for LIDAR remote sensing to obtain information about the environment in point cloud format and recognize and construct the environment in real time. Based on this information, the drone is capable of autonomous navigation taking into account its environment and preventing collisions with both expected and unexpected objects that could be at the inspection site.

The drone includes an ultrasonic probe to perform NDT tests such as measuring infrastructure thicknesses.

The drone is aimed at installing various sensors for specific data collection, such as gas detection cameras or even gas detectors.

### Electrostatic spark prevention:

To prevent electrostatic sparks that may cause fire or explosions in explosive atmospheres, the pieces that make up the enclosure are made of polymer with conductive fillers in a first embodiment, or finished with paint with conductive fillers in a second embodiment.

### Temperature limitation:

Controlling the temperature both inside the drone and in the external elements makes it possible, on the one hand, to verify that the drone is operating normally, and on the other, to alert us in case the temperature rises unexpectedly so that the drone can leave the explosive zone as soon as possible. Temperatures of 200°C should not be reached at any time, however, they are controlled.

Detecting ambient temperature and avoiding exposing the drone to temperatures around 200 degrees or higher is a condition for the drone to operate safely in the presence of more than, for example, 90% of tabulated substances. Flammable gases are classified in tables by gas groups and ignition temperatures. By ensuring that these requirements are met, safe flight can be ensured in the presence of up to 90% of the substances being tabulated, registered, recognized, etc. which would allow the drone to fly in the vast majority of refineries (always gas, not dust).

The drone includes two temperature sensors that will send an alarm signal if temperature values close to or greater than 200 degrees are reached and the mission can be aborted or the power supply to the failed element be cut off depending on the case. In the event that, for example, a motor increases its temperature compared to the rest, we can choose to turn it off in flight as an emergency measure. By means of the redundancy in the propulsion system, safety and integrity of the equipment and facilities can be guaranteed after said power cut action.

### Drone enclosure

The structure of the drone according to the present invention comprises a pressurized enclosure that allows the avionics (i.e. control part of the drone) to be separated from the power electronics and the set of sensors to minimize the interferences that the power electronics and the set of sensors generate in avionics. Furthermore, the proposed enclosure structure separates the power part (not subject to replacement) from the set of sensors that may need repair or change. Thus, with the enclosure according to the present invention, data extraction and maintenance operations are facilitated.

At a mechanical level, it is of interest to house the power electronics in the central ring of the pressurized enclosure (the central ring has greater structural rigidity as it comprises carbon fiber) and use two 'covers' to cover the rest of the internal elements as a capsule in a preferred embodiment.

The pressurized enclosure can be the optimal way to contemplate access to the exterior (drone wiring) from the pressurized enclosure, minimizing weak points in the chassis of the pressurized enclosure and internal pressure peaks (at specific moments such as contact with structures, takeoffs and landings).

Not reaching temperatures close to 200° is a requirement that will allow it to operate safely in the presence of more than 90% of tabulated substances.

However, two temperature sensors will send an alarm signal if certain temperature values close to or greater than 200° are reached and the mission can be aborted or the power supply to the failed element can be cut off depending on the case.

### Description of the drawings

To complement the description that is being made and in order to help a better understanding of the features of the drone according to the present invention, some schematic figures are attached as an integral part of said description wherein, for illustrative and non-limiting purposes, the following has been represented:
Figure 1 shows a preferred embodiment of the drone according to the present invention.
Figure 2 shows an exploded view of the enclosure.
Figure 3 shows the central ring of the enclosure.

### Detailed embodiment of the invention

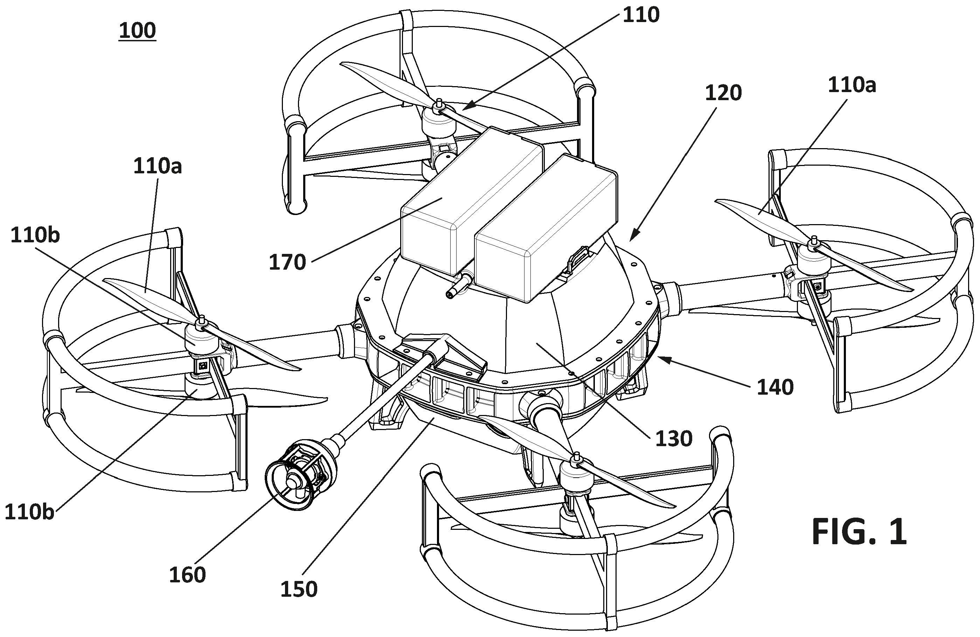

Figure 1 shows the operational safety drone (100) for outdoor industrial inspection, designed to operate in areas susceptible to occasional formation of explosive atmospheres. Due to the potential presence of flammable atmospheres in these areas, the drone (100) includes features that prevent the exposure of risk elements to the potential mixture of explosive substances.

In the preferred embodiment, the drone (100) for explosive gas atmospheres comprises propulsion means (110) comprising propellers (110a) connected to eight coaxial rotors (110b).

The drone (100) is characterized in that it comprises coaxial rotors (110b) built with common systems of vertical propulsion aircraft and isolated from contact with flammable gases. The elements that must inevitably be exposed to these gases have been custom developed to meet the operational needs required in explosive environments.

In this preferred embodiment, the drone (100) is propelled through eight brushless motors custom made for the operational dimensions and safety features of the drone (100). Each of the motors used in the drone (100) is individually certified under an extensive series of material and dimensional requirements.

The coaxial rotors (110b) incorporated in the drone (100) are of the inrunner type, wherein the only external moving part thereof is the motor shaft itself. Built under the defined premises, it is a motor that is protected against dust deposits and water projections from any direction.

The coaxial rotors (110b) have been designed to be powered by LiPo lithium batteries (170) and lift up to several kilos independently, in such a way that in case of emergency up to four motors can be disconnected and the remaining ones are sufficient to return the drone (100) to land in safe conditions.

Structurally, the coaxial rotor cover (110b) is made of aluminum with a material composition sheet that excludes concentrations of magnesium and titanium.

The drone (100) comprises a pressurized enclosure (120) connected to the propulsion means (110) and comprising polymeric material with conductive fillers. The pressurized enclosure (120) comprises a first cover (130), a central ring (140) and a second cover (150).

Figure 1 shows the pressurized enclosure (120), this is composed of a central ring (140) and the first cover (130) and the second cover (150) in the form of domes. Both the pressurized enclosure (120) and the chassis and arms of the drone (100) are designed and manufactured in a polymer with conductive fillers from a construction safety point of view, preventing the appearance of sparks due to electrostatics and in the event of a collision or vehicle accident.

Thus, the three pieces are manufactured in polymer with a concentration of conductive fillers that eliminate the electrostatic properties of plastics, thus mitigating one of the main causes of ignition of flammable gases.

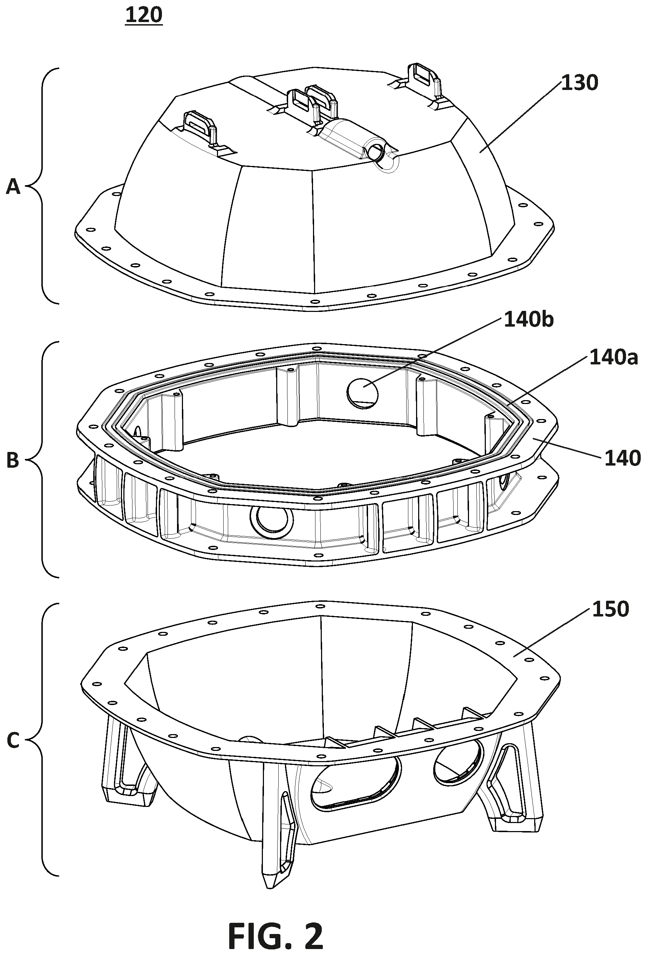

Figure 2 shows the enclosure (120) of the drone (100) according to the present invention. The pressurized enclosure (120) comprises the first cover (130), the central ring (140) and the second cover (150).

Figure 2 shows a first space (A) defined between the first cover (130) and the central ring (140). The first space (A) houses the drone control unit for controlling at least the propulsion means.

The control unit includes the electronic components and sensors both for controlling the drone (100) and for collecting and analyzing data in real time.

The control unit is protected by the pressurized enclosure (120) that isolates these components from hostile external elements and conditions such as temperature, humidity, corrosive environments, harmful or flammable gases, etc.

Particularly, the control unit comprises a security system against a possible loss of pressure by activating early signals, to remove the drone (100) from a classified area before the pressure reaches levels that compromise the safety of the environment.

Figure 2 shows a second space (B) defined in the central ring (140) which houses the power electronics for feeding the propulsion means.

Figure 2 shows a third space (C) defined between the second cover (150) and the central ring (140) which houses one or more control and data acquisition sensors controlled by the control unit.

In the third space (C) there is the visual inspection sensor that is appropriate in each case: RGB, thermal, or gas images, as well as a small on-board computer responsible for collecting and managing the collected information.

As part of the control and data acquisition sensors, the drone (100) includes cameras with sensors of different types and frontal and zenith orientations, as well as landing gear-like geometry.

As part of the control and data acquisition sensors, the drone (100) comprises an ultrasonic probe (160) configured to carry out NDT inspections such as thickness measurements or detection of defects in metal structures.

The drone (100) is powered by two "packs" of Lithium batteries (170) integrated in safety covers and external to the drone (100) that allow the rapid exchange of lithium batteries (170) without conditioning the drone (100) with long waiting periods during charging.

The lithium batteries (170) of the drone (100) are composed of several high discharge rate lithium cells in series. The drone (100) mounts two independent lithium batteries (170) to power different propulsion circuits separately, guaranteeing redundant power.

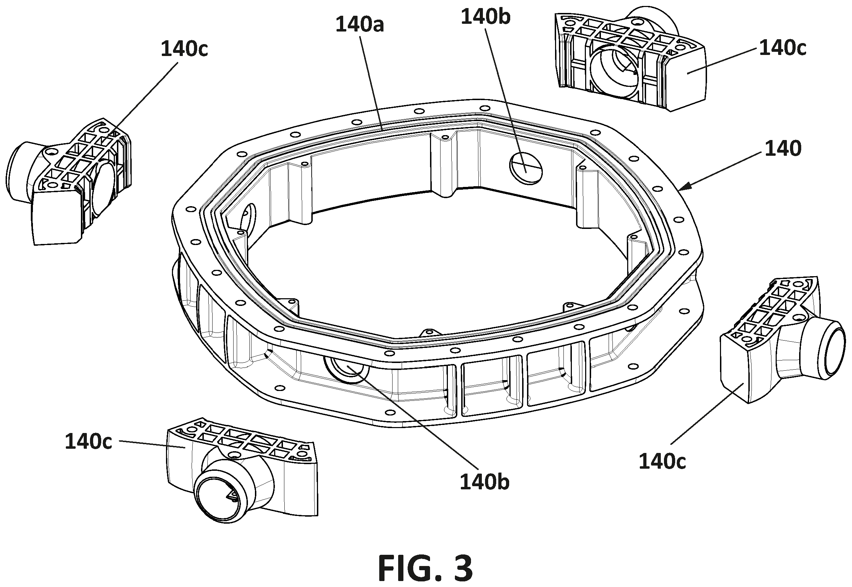

Figure 3 shows the central ring (140) comprising an internal carbon fiber structure. This structure in turn has reinforcements to provide greater rigidity and dimensional stability to the upper and lower covers or domes.

To preserve the pressure inside the pressurized enclosure (120), the central ring (140) has pressure labyrinths (140a) for O-rings. Pressure leaks are prevented by uniformly distributing pressure over the O-rings located in the pressure labyrinths (140a).

The absolute pressure inside the pressurized enclosure (120) is higher than atmospheric pressure, thus preventing air access to its interior. The gas used for pressurization is nitrogen. Due to its lower density than air, the pressurized enclosure (120) in the upper cover (130) has a loading valve and the lower cover (150) has a discharge valve.

The pressure inside the pressurized enclosure (120) is monitored for safety and redundancy reasons by two independent high-precision pressure sensors. The reading of the sensors is carried out by the drone's on-board computer (100) through a security circuit. The computer updates the pressure sensor readings with high frequency, and notifies instantly in case of anomaly in any of the readings. If for any reason the pressure decreases inside the drone (100), the computer will issue alarm signals to the operators of the drone (100) to abort the mission and leave the risk area as soon as possible.

The pressurized enclosure (120) has six exit points for wiring, managed through polyamide cable glands.

Figure 3 shows the central ring (140) without the O-rings, as well as four polyamide cable glands (140c).

The O-ring is a ring-shaped seal made of elastic material that is used to prevent leaks between two surfaces and achieve tightness.

Polyamide cable glands (140c) have the same function as the O-ring, but for sealing tubes or electrical cables. In this case, the cables coming from inside the pressurized enclosure (120).

## Claims

1. Drone (100) for explosive gas atmospheres, comprising:
- propulsion means (110) comprising propellers (110a) connected to coaxial rotors (110b);
- pressurized enclosure (120) connected to the propulsion means (110) and comprising polymeric material with conductive fillers,
- wherein the pressurized enclosure (120) comprises a first cover (130), a central ring (140) and a second cover (150),
- wherein a first (A) space defined between the first cover (130) and the central ring (140) houses the drone control unit (100) for controlling at least the propulsion means,
- wherein a second space (B) defined in the central ring (140) houses the power electronics for powering the propulsion means; and
- wherein a third space (C) defined between the second cover (150) and the central ring (140) houses one or more control and data acquisition sensors.

2. Drone (100) for explosive gas atmospheres according to claim 1, wherein the propulsion means (110) comprises four coaxial rotors (110b) connected to four propellers (110a), respectively.

3. Drone (100) for explosive gas atmospheres according to the preceding claim, wherein the propulsion means (110) further comprises four redundant coaxial rotors connected to the four propellers (110a), respectively.

4. Drone (100) for explosive gas atmospheres according to claim 3, which further comprises lithium batteries (170), and wherein the coaxial rotors and the redundant coaxial rotors are inrunner-type brushless motors powered by the lithium batteries (170).

5. Drone (100) for explosive gas atmospheres according to the preceding claims, wherein the polymeric material with conductive fillers comprises polymer or polymeric Paint.

6. Drone (100) for explosive gas atmospheres according to the preceding claims wherein the pressurized enclosure (120) comprises pressure labyrinths (120a) and O-rings established in the pressure labyrinths (140a) in connection planes between the first cover (130) and the central ring (140) and between the second cover (15) the central ring (140) to prevent leaks and achieve tightness.

7. Drone (100) for explosive gas atmospheres according to the preceding claims wherein the pressurized enclosure (120) comprises one or more holes (140b) adapted for the configuration of one or more polyamide cable glands (140c) configured to seal electrical cables coming from the pressurized enclosure (120).

8. Drone (100) for explosive gas atmospheres according to the preceding claims, wherein the first cover (130) and the second cover (150) comprise a domed shape.

9. Drone (100) for gas atmospheres according to the preceding claims, wherein the one or more control and data acquisition sensors comprise cameras and the second cover (150) comprises transparent viewers.

10. Drone (100) for gas atmospheres according to the preceding claims, wherein the one or more control and data acquisition sensors comprise thermal, gas, pressure sensors and/or an ultrasound probe (160).

11. Drone (100) for gas atmospheres according to the preceding claims, wherein the one or more control and data acquisition sensors comprise redundant sensors to monitor the internal pressure and temperature of the pressurized enclosure (120).

12. Drone (100) for gas atmospheres according to the preceding claims, wherein the central ring (140) comprises carbon fiber.

13. Drone (100) for gas atmospheres according to the preceding claims, wherein the first cover (130) comprises a pressurization valve and the second cover (150) comprises a depressurization valve, wherein one or more control sensors and data acquisition includes pressure sensors.

14. Drone (100) for gas atmospheres according to the previous claims, wherein the control unit comprises its own battery for autonomous operation of the control unit.

15. Drone (100) for gas atmospheres according to the previous claims, wherein the third space (C) houses an on-board computer configured to collect and manage the information collected by the one or more control and data acquisition sensors.
